# EUROPÄISCHE PATENTSCHRIFT

(11) **EP 4 017 757 B1**
(45) Veröffentlichungstag und Bekanntmachung des Hinweises auf die Patenterteilung: **22.07.2026**
(21) Anmeldenummer: 20734722.0
(22) Anmeldetag: 24.06.2020
(51) Int. Cl.: B65H 75/36, B66F 7/06, B60L 53/14, B60L 53/35, B60L 53/37, B66D 1/36, H02G 11/00

(54) **LADEROBOTER UND LADEVORRICHTUNG ZUM AUFLADEN EINES SPEICHERS FÜR ELEKTRISCHE ENERGIE EINES FAHRZEUGS SOWIE FAHRZEUG, DESSEN SPEICHER FÜR ELEKTRISCHE ENERGIE MIT EINER DERARTIGEN LADEVORRICHTUNG AUFLADBAR IST**
CHARGING ROBOT AND CHARGING DEVICE FOR CHARGING AN ELECTRICAL ENERGY STORAGE DEVICE OF A VEHICLE, AND VEHICLE WHOSE ELECTRICAL ENERGY STORAGE DEVICE CAN BE CHARGED WITH SUCH A CHARGING DEVICE
ROBOT DE CHARGEMENT ET DISPOSITIF DE CHARGEMENT POUR CHARGER UN DISPOSITIF DE STOCKAGE D'ÉNERGIE ÉLECTRIQUE D'UN VÉHICULE, ET VÉHICULE DONT LE DISPOSITIF DE STOCKAGE D'ÉNERGIE ÉLECTRIQUE PEUT ÊTRE CHARGÉ AVEC UN TEL DISPOSITIF DE CHARGEMENT

(30) Priorität: 19.08.2019 DE 102019122158
(43) Veröffentlichungstag der Anmeldung: 29.06.2022
(73) Patentinhaber: IMS Gear SE & Co. KGaA, 78166 Donaueschingen (DE)
(72) Erfinder: HOFSCHULTE, Wolfram, 79848 Bonndorf (DE); WERSCHLER, Marco, 78315 Radolfzell am Bodensee (DE); FECHLER, Jens, 78183 Hüfingen (DE); BAUMEISTER, Uwe, 78199 Bräunlingen (DE); REHLE, Daniel, 78078 Niedereschach (DE); TEICHMANN, Robin, 78467 Konstanz (DE); MITTELBACH, Marcel, 79859 Schluchsee (DE); NAGEL, Benedikt, 78076 Brigachtal (DE); FUCHS, Gabriel, 78479 Reichenau (DE)
(74) Vertreter: Westphal, Mussgnug & Partner Patentanwälte mbB
(86) Internationale Anmeldenummer: PCT/EP2020/067718
(87) Internationale Veröffentlichungsnummer: WO 2021/032342

(56) Entgegenhaltungen:
- EP-A1- 2 684 733
- EP-A1- 2 684 733
- EP-A2- 3 515 751
- EP-B1- 0 814 557
- WO-A2-2018/055498
- WO-A2-2018/055498
- DE-A1- 102011 006 104
- DE-A1- 102011 006 104
- DE-A1- 102014 226 357
- DE-A1- 102014 226 357
- DE-A1- 102015 117 116
- DE-A1- 102015 117 116
- FR-A1- 3 066 052
- FR-A1- 3 066 052

## Beschreibung

Die vorliegende Erfindung betrifft einen Laderoboter sowie eine Ladevorrichtung zum Aufladen eines Speichers für elektrische Energie eines Fahrzeugs. Weiterhin betrifft die Vorrichtung ein Fahrzeug, dessen Speicher für elektrische Energie mit einer derartigen Ladevorrichtung aufladbar ist.

Im Zuge der Bestrebungen, die CO₂-Emissionen zu verringern, rückt eine zunehmende Elektrifizierung von Fahrzeugen in den Fokus. Während Fahrzeuge, die mit fossilen Brennstoffen oder alternativen Brennstoffen wie Wasserstoff betrieben werden, relativ einfach und in relativ kurzer Zeit aufgetankt werden können, ist ein Aufladen der Speicher für elektrische Energie von elektrisch angetriebenen Fahrzeugen ein deutlich komplexerer und langwierigerer Vorgang. Zum Aufladen des Speichers für elektrische Energie wird üblicherweise ein Stecker, der mittels eines Ladekabels an einer Ladesäule angeschlossen ist, an eine korrespondierend ausgestaltete Steckdose des betreffenden Fahrzeugs angeschlossen. Ist der Ladevorgang abgeschlossen, kann der Stecker aus der Steckdose herausgezogen und das Fahrzeug wieder bewegt werden. Die Ladesäule bezieht die elektrische Energie üblicherweise aus dem örtlichen Stromnetz. Je nach Ausgestaltung der Ladesäulen kann das Ladekabel auf eine in der Ladesäule angeordnete Trommel aufgewickelt werden, um zu verhindern, dass das Ladekabel ein Hindernis beispielsweise für Fußgänger oder Fahrradfahrer darstellt.

Bei der Verwendung von Stecker und Steckdose soll im Folgenden von einem konduktiven Ladevorgang gesprochen werden. Alternativ kann der Ladevorgang auch induktiv durchgeführt werden, wobei zwei Induktionsspulen möglichst nach aneinander gebracht werden. Da aber der Wirkungsgrad eines induktiven Ladevorgangs üblicherweise deutlich geringer ist als der eines konduktiven Ladevorgangs, werden die meisten Ladesäulen konduktiv betrieben.

Die Verwendung von Ladesäulen hat jedoch verschiedene Nachteile: Die Anzahl der Ladekabel pro Ladesäule ist begrenzt. Typischerweise weist eine Ladesäule nicht mehr als drei Ladekabel auf. Weiterhin ist es notwendig, die betreffenden Fahrzeuge in unmittelbarer Nähe der Ladesäule zu parken, da die Länge der Ladekabel begrenzt ist. Darüber hinaus ist der effektive Betrieb einer Ladesäule nur bedingt möglich. Bei herkömmlichen Tankstellen, an welchen ein mit fossilen Brennstoffen oder mit Brennstoffen wie Wasserstoff betriebenes Fahrzeug aufgetankt werden kann, hält das betreffende Fahrzeug für eine vergleichsweise kurze Zeit an. Wie erwähnt, ist das Aufladen der Speicher für elektrische Energie der betreffenden Fahrzeuge zwar ein im Vergleich zum Auftanken von mit fossilen Brennstoffen und mit Brennstoffen wie Wasserstoff betriebenen Fahrzeugen ein deutlich längerer Vorgang. Aus diesem Grund werden die Ladesäulen auch so betrieben, dass ein Fahrzeug über Nacht beim Parken aufgeladen werden kann. Üblicherweise nimmt der Ladevorgang aber nicht die ganze Nacht in Anspruch. Wenn der Fahrer eines elektrisch betriebenen Fahrzeugs dieses an eine in der Nähe seiner Wohnung oder in einem Parkhaus installierte Ladesäule am Abend anschließt, um am nächsten Morgen mit vollem Speicher fahren zu können, der Ladevorgang aber beispielsweise um Mitternacht bereits abgeschlossen ist, ist es mit erheblichen Umständen verbunden und kaum praktikabel, einerseits den Stecker aus der Steckdose zu entfernen und andererseits das Fahrzeug an einem anderen Stellplatz abzustellen, um die betreffende Ladesäule zum Aufladen des Speichers für elektrische Energie eines anderen Fahrzeugs freizumachen.

Um eine Abhilfe für diese Situation zu schaffen, sind Laderoboter entwickelt worden, welche ohne die Mithilfe des Fahrers des betreffenden Fahrzeugs den Stecker in die Steckdose einstecken und diesen nach Abschluss des Ladevorgangs wieder aus dieser entfernen können. Derartige Laderoboter sind beispielsweise in der DE 10 2016 014 463 A1, der DE 10 2009 006 982 A1, der DE 10 2014 107 153 A1, der DE 10 2014 226 357 A1, der DE 10 2015 117 116 A1, der US 9 056 555 B1, der US 9 592 742 B1, der US 2013 007 6902 A1 und der DE 10 2009 001 080 A1 offenbart. Ein wesentlicher Vorteil derartiger Laderoboter ist, dass der Stecker mehr oder weniger unmittelbar nach Abschluss des Ladevorgangs aus der Steckdose gezogen wird, so dass anschließend der Stecker zum Aufladen des Speichers für elektrische Energie eines anderen Fahrzeugs verwendet werden kann. Die betreffende Ladesäule kann deutlich effektiver verwendet werden, allerdings muss das Fahrzeug nach abgeschlossenem Ladevorgang auch von der Ladesäule entfernt werden, damit der Laderoboter das Ladekabel zu einem anderen Fahrzeug führen kann.

Sowohl in Parkhäusern als auch in den Innenstädten ist der zur Verfügung stehende Raum eng bemessen. Bei einer Vielzahl von elektrisch betriebenen Fahrzeugen befindet sich die Steckdose in etwa in der Position, wo die Tankstutzen von mit fossilen Brennstoffen betriebenen Fahrzeugen angeordnet sind, also an der Seitenwand des Fahrzeugs. Ein Laderoboter muss demnach genügend Platz haben, um sich seitlich vom Fahrzeug bewegen zu können. Der in Parkhäusern oder Parkplätzen zwischen zwei benachbart parkenden Fahrzeugen zur Verfügung stehende Raum reicht hierzu üblicherweise nicht aus. Beispielsweise aus der DE 10 2009 001 080 A1 ist es daher bekannt, die Steckdose am Unterboden des Fahrzeugs anzuordnen und den Laderoboter so auszuführen, dass er unter das betreffende Fahrzeug fahren kann. Dabei ist es jedoch notwendig, dass das Fahrzeug eine gewisse Bodenfreiheit aufweist. Insbesondere bei Sportwagen ist die Bodenfreiheit jedoch sehr begrenzt, so dass sich diese mit den bislang bekannten Laderobotern nicht aufladen lassen, wenn die Steckdose am Unterboden angeordnet ist. Gleichzeitig weist eine Vielzahl von Fahrzeugen, insbesondere SUVs, eine vergleichsweise große Bodenfreiheit auf.

Weitere Laderoboter sind aus der DE 10 2011 006 104 A1 und der DE 10 2015 117 116 A1 bekannt, wobei die letztgenannte Druckschrift einen Laderoboter mit den Merkmalen des Oberbegriffs des Patentanspruchs 1 offenbart.

Aufgabe einer Ausführungsform der vorliegenden Erfindung ist es, einen Laderoboter zum Aufladen eines Speichers für elektrische Energie eines Fahrzeugs vorzuschlagen, mit welchem Fahrzeuge sowohl mit geringer als auch hoher Bodenfreiheit aufgeladen werden können.

Des Weiteren liegt einer Ausgestaltung der vorliegenden Erfindung die Aufgabe zugrunde, eine Ladevorrichtung zu schaffen, mit welcher Fahrzeuge sowohl mit geringer als auch mit großer Bodenfreiheit aufgeladen werden können.

Darüber hinaus liegt eine Ausbildung der Erfindung die Aufgabe zugrunde, ein Fahrzeug bereitzustellen, welches mit einer derartigen Ladevorrichtung aufladbar ist.

Diese Aufgabe wird mit den in den Ansprüchen 1, 13 und 16 angegebenen Merkmalen gelöst. Vorteilhafte Ausführungsformen sind Gegenstand der Unteransprüche.

Die Ausführungsform der Erfindung ist durch den Hauptanspruch 1 sowie die abhängigen Ansprüche definiert.

Wie eingangs erwähnt, kann der Ladevorgang sowohl konduktiv als auch induktiv durchgeführt werden. Beim konduktiv durchgeführten Ladevorgang sind typischerweise der Kontaktabschnitt als Stecker und der Gegenkontaktabschnitt als Steckdose oder umgekehrt ausgebildet. Beim induktiven Ladevorgang sind der Kontaktabschnitt und der Gegenkontaktabschnitt häufig plattenförmig ausgebildet. In beiden Fällen müssen der Kontaktabschnitt und der Gegenkontaktabschnitt in unmittelbare Nähe zueinander gebracht werden, damit elektrische Energie zwischen dem Kontaktabschnitt und dem Gegenkontaktabschnitt übertragen werden kann. Der Begriff "elektrisch leitend verbindbar" ist beim induktiven Ladevorgang nicht im mechanischen Sinne zu verstehen, wonach der Kontaktabschnitt und der Gegenkontaktabschnitt miteinander in Berührung kommen. Vielmehr verbleibt ein Luftspalt, der jedoch so klein wie möglich gehalten werden soll. Beim konduktiv durchgeführten Ladevorgang kommen der Kontaktabschnitt und der Gegenkontaktabschnitt miteinander in Berührung.

Der vorschlagsgemäße Laderoboter zeichnet sich dadurch aus, dass der erste Aufnahmeraum und der zweite Aufnahmeraum nebeneinander angeordnet sind. Ausgehend von einem mehr oder weniger horizontal verlaufenden Untergrund liegen der erste Aufnahmeraum und der zweite Aufnahmeraum idealerweise in einer Ebene und fluchten vorzugsweise in horizontaler Richtung miteinander. Sie sind in vertikaler Richtung nicht übereinander angeordnet. Infolgedessen lässt sich der vorschlagsgemäße Laderoboter besonders flach bauen, wodurch es ermöglicht wird, den Laderoboter auch unter Fahrzeuge, insbesondere unter Sportwagen, welche eine geringe Bodenfreiheit haben, zu fahren und den Kontaktabschnitt mit einem am Unterboden des betreffenden Fahrzeugs angeordneten Gegenkontaktabschnitt elektrisch übertragend zu verbinden.

Des Weiteren weist der Laderoboter eine Führungseinrichtung auf, mit welcher das Ladekabel im zweiten Aufnahmeraum geführt wird. Wie erwähnt, kann der vorschlagsgemäße Laderoboter besonders flach ausgeführt werden, allerdings steht in horizontaler Richtung bezogen auf den bestimmungsgemäßen Gebrauch des Laderoboters vergleichsweise viel Bauraum zur Verfügung. Entsprechend kann der zweite Aufnahmeraum ausgestaltet sein, so dass auch ein langes Ladekabel nahezu vollständig im zweiten Aufnahmeraum aufgenommen werden kann. Die Führungseinrichtung sorgt dafür, dass das Ladekabel nicht ungeordnet im zweiten Aufnahmeraum verläuft, sondern raumsparend insbesondere in Schleifen geführt wird. Bei einer entsprechenden Gestaltung und Befestigung des Ladekabels im zweiten Aufnahmeraum können die Wände und die Decke des zweiten Aufnahmeraums bereits als Führungsmittel wirken.

Aufgrund der Tatsache, dass das Ladekabel nahezu vollständig im Laderoboter aufgenommen werden kann, ist es nicht notwendig, die Ladesäule mit entsprechend ausgebildeten Vorrichtung, beispielsweise mit Trommeln, auszustatten, um zu gewährleisten, dass das Ladekabel keine Schlaufen bildet, in welchen Fußgänger oder Fahrradfahrer hängen bleiben können. Darüber hinaus wird verhindert, dass der Laderoboter selbst über das Ladekabel fahren muss, so dass hierdurch ein Blockieren des Laderoboters verhindert wird. Es kann sogar ganz auf eine Ladesäule verzichtet werden. Eine entsprechend eingerichtete Steckdose genügt.

Wie erwähnt, ist in horizontaler Richtung genügend Raum unter dem betreffenden Fahrzeug vorhanden. Insofern kann auch der erste Aufnahmeraum eine große horizontale Erstreckung aufweisen, so dass die Hubeinrichtung den horizontal zur Verfügung stehenden Raum so ausnutzen kann, dass sie so weit ausgefahren werden kann, um auch für Fahrzeuge mit größerer Bodenfreiheit aufzuladen.

Nach Maßgabe einer weiteren Ausführungsform weist die Führungseinrichtung im zweiten Aufnahmeraum angeordnete Vorsprünge und/oder Ausnehmungen auf, welche mit dem Ladekabel führend zusammenwirken. Mit Vorsprüngen oder Ausnehmungen ist es auf besonders einfache Weise möglich, das Ladekabel innerhalb des zweiten Aufnahmeraums zu so führen, dass das Ladekabel möglichst vollständig im zweiten Aufnahmeraum aufgenommen werden kann. Dabei können die Vorsprünge und/oder die Ausnehmungen so ausgestaltet sein, dass sich das Ladekabel S-förmig oder meanderförmig im zweiten Aufnahmeraum ausrichtet, wenn es in den zweiten Aufnahmeraum eingeschoben wird.

In einer weitergebildeten Ausführungsform kann die Führungseinrichtung zumindest eine ortsfeste Umlenkrolle aufweisen. Unter einer ortsfesten Umlenkrolle soll im Folgenden eine Umlenkrolle verstanden werden, die sich um die eigene Drehachse drehen kann, wobei die Drehachse als solche nicht bewegbar ist. Die Verwendung von ortsfesten Umlenkrollen hat insbesondere den Vorteil, dass sie der Bewegung des Ladekabels folgen und somit die Reibung zwischen der Umlenkrolle und dem Ladekabel gering gehalten wird. Der Isoliermantel des Ladekabels wird daher geschont.

Erfindungsgemäß weist der Laderoboter eine im zweiten Aufnahmeraum angeordnete Einzugseinrichtung zum Einziehen des Ladekabels in den zweiten Aufnahmeraum auf. Grundsätzlich weisen die Ladekabel aufgrund der Tatsache, dass ein vergleichsweise hoher Strom beim Aufladen verwendet wird, um die Ladezeit zu verringern, einen vergleichsweise großen Querschnitt auf. Infolgedessen ist das Ladekabel in sich verhältnismäßig steif, so dass bei einer entsprechenden Bewegung des Laderoboters relativ zum Ladekabel dieses in den zweiten Aufnahmeraum eingeschoben wird. Insofern ist es nicht notwendig, eine Einzugseinrichtung vorzusehen, um zu verhindern, dass das Ladekabel ein Hindernis für den Laderoboter selbst oder für Personen darstellt, die sich in unmittelbarer Umgebung des Ladekabels aufhalten. Allerdings ist es mit der Einzugseinrichtung möglich, dass Ladekabel zielgerichtet in den zweiten Aufnahmeraum einzuziehen. Insbesondere ist es möglich, dass Ladekabel mehr oder weniger straff zu halten, unabhängig davon, wo sich der Laderoboter gerade aufhält. Folglich kann das Ladekabel keine Schlaufen bilden. Die Einzugseinrichtung kann so eingestellt werden, dass Ladekabel nicht zu straff angezogen wird, um zu verhindern, dass das Kabel zu stark gespannt wird. Die hiermit verbundene mechanische Belastung wird daher in Grenzen gehalten.

Erfindungsgemäß weist die Einzugseinrichtung zumindest eine antreibbare Umlenkrolle auf. Insbesondere in Verbindung mit einer ortsfesten Umlenkrolle, aber auch mit einem Wandabschnitt des zweiten Aufnahmeraums kann mittels der antreibbare Umlenkrolle ein Drehmoment auf das Ladekabel aufgebracht werden, wodurch dieses in den zweiten Aufnahmeraum eingezogen oder aus diesem ausgezogen wird. In dieser Ausführungsform lässt sich die Einzugseinrichtung besonders einfach ausgestaltet.

Die Erfindung zeichnet sich dadurch aus, dass die antreibbare Umlenkrolle mittels der Antriebseinheit angetrieben wird . Es wird also diejenige Antriebseinheit zum Antreiben der Umlenkrolle verwendet, mit welcher zumindest ein Rad des Laderoboters angetrieben wird. Hierdurch wird einerseits erreicht, dass zum Antreiben der Umlenkrolle nicht noch eine weitere Antriebsvorrichtung benötigt wird, andererseits ist es möglich, die Umlenkrolle insbesondere mechanisch mit der Antriebseinheit zu synchronisieren. Die Synchronisierung kann mit einem entsprechend gestalteten Getriebe vorgenommen werden. Die Synchronisierung kann beispielsweise derart gestaltet sein, dass für den Fall, dass der Laderoboter zur Ladesäule hin fährt, dass Ladekabel in den zweiten Aufnahmeraum eingezogen wird und umgekehrt. Die bereits oben erwähnte Bildung von Schlaufen des Ladekabels wird verhindert und eine übermäßige Spannung des Ladekabels vermieden.

Nach Maßgabe einer weiteren Ausführungsform weist die Einzugseinrichtung zumindest einen entlang einer Verschiebeachse zwischen einer ersten Endstellung und einer zweiten Endstellung axial verschiebbaren Umlenkstab auf. Das Ladekabel kann mit dem Umlenkstab so umgelenkt werden, dass ein möglichst großer Anteil des Ladekabels im zweiten Aufnahmeraum aufgenommen werden kann. Aufgrund der axialen Verschiebbarkeit des Umlenkstabs kann das Ladekabel in den zweiten Aufnahmeraum eingezogen und aus diesem wieder ausgezogen werden. Das Ladekabel tritt durch eine Ausgangsöffnung in den zweiten Aufnahmeraum ein. Bewegt sich der Umlenkstab dieser Ausgangsöffnung weg, wird das Ladekabel in den zweiten Aufnahmeraum eingezogen und umgekehrt. Alternativ kann der Umlenkstab mit einer eigenen Antriebseinrichtung zwischen der ersten und der zweiten Endstellung verschoben werden. Das Einziehen und Ausziehen des Ladekabels kann mit der Antriebseinrichtung zielgerichtet durchgeführt werden.

Eine weitere Ausführungsform zeichnet sich dadurch aus, dass der Umlenkstab um eine senkrecht zur Verschiebeachse verlaufende Drehachse drehbar ist. In diesem Fall ist der Umlenkstab nach Art einer Umlenkrolle ausgestaltet, wodurch die Reibung, welche zwischen dem Umlenkstab und dem Ladekabel insbesondere beim axialen Verschieben wirkt, verringert werden kann. Der Isoliermantel des Ladekabels wird hierdurch geschont.

In einer weitergebildeten Ausführungsform kann der Umlenkstab mittels eines Vorspannelements in die erste oder die zweite Endstellung vorgespannt sein. Das Vorspannelement kann insbesondere als eine Feder ausgestaltet sein. Die Endstellung, in welche der Umlenkstab vorgespannt wird, kann zweckmäßigerweise diejenige sein, welche von der Öffnung, durch welche das Ladekabel in den zweiten Aufnahmeraum eintritt, weiter entfernt ist. Wird das Ladekabel entspannt, insbesondere dann, wenn der Laderoboter zur Ladesäule hin fährt, wird das Ladekabel entspannt und aufgrund der axialen Bewegung des Umlenkstab in den zweiten Aufnahmeraum eingezogen. Die hierzu notwendigen Bauteile sind vergleichsweise einfach und daher günstig in der Beschaffung.

Bei einer weitergebildeten Ausführungsform kann das Ladekabel als ein Flachbandkabel ausgeführt sein. Üblicherweise weisen Ladekabel einen im Wesentlichen kreisförmigen Querschnitt auf. Ein Flachbandkabel hingegen weist einen Querschnitt auf, welcher sich einem relativ breiten und flachen Rechteck annähert. Das Flachbandkabel kann so angeordnet sein, dass es den zweiten Aufnahmeraum in etwa senkrecht durchläuft. Das Flachbandkabel lässt sich besonders dicht zusammenschieben, so dass auch ein sehr langes Ladekabel im zweiten Aufnahmeraum aufgenommen werden kann. Zudem lässt sich ein Flachbandkabel um die Längsachse besonders leicht biegen, wodurch das Einziehen in den zweiten Aufnahmeraum vereinfacht wird.

Bei einer weiteren Ausführungsform kann der Laderoboter eine Abstandsmesseinrichtung aufweisen, mit welcher der Abstand des Laderoboters zu benachbart angeordneten Gegenständen, insbesondere zum Gegenkontaktabschnitt, bestimmbar ist. Wie eingangs erwähnt, ist es eine der wichtigsten Aufgaben des Laderoboters, den Kontaktabschnitt so dicht an den Gegenkontaktabschnitt heranzuführen, dass elektrische Energie übertragen werden kann. Hierzu ist es notwendig, dass der Laderoboter eine Information darüber hat, wo sich der Gegenkontaktabschnitt befindet. Diese Informationen kann der Laderoboter über die Abstandsmesseinrichtung erhalten. Es ist daher nicht notwendig, das Fahrzeug, dessen Speicher für elektrische Energie aufgeladen werden soll, in eine bestimmte Position in Bezug auf die Ladesäule oder einen anderen Referenzpunkt zu bringen. Zudem ist es auch nicht notwendig, den Gegenkontaktabschnitt an einer bestimmten Stelle des Fahrzeugs anzubringen. Vielmehr ermittelt der Laderoboter selbst die Position des Gegenkontaktabschnitts und kann selbstständig so zu dieser hinfahren, dass der Kontaktabschnitt elektrische Energie zum Gegenkontaktabschnitt oder umgekehrt übertragen kann.

Eine weitergebildete Ausführungsform zeichnet sich dadurch aus, die Abstandsmesseinrichtung eine Lidar-Einrichtung umfasst. Die Verwendung einer Lidar-Einrichtung ermöglicht es auf vergleichsweise einfache Art und Weise, Abstände zu benachbart angeordneten Gegenständen zu ermitteln. Die Lidar-Einrichtung kann sehr raumsparend ausgeführt werden.

Eine weitere Ausführungsform zeichnet sich dadurch aus, dass die Lidar-Einrichtung zumindest teilweise an der Hubeinrichtung angeordnet ist. In dieser Ausführungsform wird die Lidar-Einrichtung zusammen mit dem Kontaktabschnitt mit der Hubeinrichtung angehoben und abgesenkt. Hierdurch wird verhindert, dass ein Ausfahren der Hubeinrichtung die Abstandsbestimmung, die von der Lidar-Einrichtung vorgenommen wird, negativ beeinflusst.

Nach Maßgabe einer weiteren Ausführungsform ist der erste Aufnahmeraum mit einer ersten Abdeckung verschlossen, in welcher zumindest eine Öffnung angeordnet ist, die mit zumindest einer Öffnungsklappe verschließbar ist. Die Hubeinrichtung und der Kontaktabschnitt können so ausgeführt sein, dass im eingefahrenen Zustand der Hubeinrichtung diese und der Kontaktabschnitt vollständig im ersten Aufnahmeraum angeordnet sind. Die erste Abdeckung sorgt dafür, dass insbesondere der Kontaktabschnitt vor äußeren Einflüssen wie Staub und Feuchtigkeit weitgehend geschützt wird. Die Öffnung kann bei Bedarf durch eine entsprechende Bewegung der Öffnungsklappe geöffnet werden, so dass die Hubeinrichtung ausgefahren werden kann.

Eine weitere Ausführungsform zeichnet sich dadurch aus, dass die Hubeinrichtung als eine Scherenhubeinrichtung ausgeführt ist. Die Scherenhubeinrichtung zeichnet sich insbesondere dadurch aus, dass sie im eingefahrenen Zustand sehr flach baut und doch sehr weit ausgefahren werden kann. Zudem lässt sich die Scherenhubeinrichtung in jeder Zwischenstellung zwischen der maximal eingefahrenen und der maximal ausgefahrenen Stellung anhalten. Folglich ermöglicht es die Scherenhubeinrichtung, Fahrzeuge mit deutlich voneinander abweichenden Bodenfreiheiten aufzuladen.

Eine Ausbildung der Erfindung betrifft eine Ladevorrichtung zum Aufladen eines Speichers für elektrische Energie eines Fahrzeugs, umfassend
- einen Laderoboter nach einem der vorherigen Ausführungsformen, und
- eine an einem Unterboden des Fahrzeugs befestigbare und mit dem Speicher verbindbare Fahrzeugeinheit, in welcher der Gegenkontaktabschnitt angeordnet ist.

Die technischen Effekte und Vorteile, die sich mit der vorschlagsgemäßen Ladevorrichtung erreichen lassen, entsprechen denjenigen, die für den vorliegenden Laderoboter erörtert worden sind. Zusammenfassend sei darauf hingewiesen, dass sich Fahrzeuge mit einer besonders geringen Bodenfreiheit aufladen lassen, bei welcher der Gegenkontaktabschnitt am Unterboden befestigt ist. Zudem lassen sich aber auch Fahrzeuge aufladen, die eine überdurchschnittlich große Bodenfreiheit aufweisen. Gleichzeitig sorgt der Laderoboter selbst dafür, dass das Ladekabel unabhängig von seiner Position straff geführt wird, so dass das Ladekabel keine Schlaufen bilden kann, welche ein Hindernis für den Laderoboter selbst oder für Personen, die sich in der unmittelbaren Umgebung des Ladekabels aufhalten, darstellen können.

Bei einer weiteren Ausbildung ist vorgesehen, dass die Fahrzeugeinheit zumindest eine Klappe aufweist, welche zwischen einer ersten Stellung und einer zweiten Stellung bewegbar ist, wobei der Gegenkontaktabschnitt an der Klappe befestigt ist. In der ersten Stellung kann die Klappe die Fahrzeugeinheit verschließen, so dass der Gegenkontaktabschnitt vor äußeren Einflüssen geschützt ist. In der zweiten Stellung wird der Gegenkontaktabschnitt aus der Fahrzeugeinheit herausgefahren, so dass er für den Laderoboter gut zugänglich ist. Gleichzeitig dient die Klappe auch zur Orientierung für den Laderoboter, da diese als gut erkennbare Einheit zur Abstandsbestimmung verwendet werden kann.

Eine fortentwickelte Ausbildung gibt vor, dass die Fahrzeugeinheit und/oder die Klappe Markierungen aufweist, welche von der Abstandsmesseinrichtung erfassbar sind. Wie erwähnt, kann die Klappe zur Abstandsbestimmung verwendet werden, da diese mit einer charakteristischen Kontur versehen werden kann, die gut von der Abstandsmesseinrichtung erfasst werden kann. Darüber hinaus können zusätzliche Markierungen in der Klappe angeordnet werden, welche sich ebenfalls besonders gut von der Abstandsmesseinrichtung erfassen lassen. Derartige Markierungen können beispielsweise das vom Lidar eingesetzte Licht in besonders starkem Maße reflektieren. Zudem können die Markierungen in einem speziellen Muster angeordnet werden, wodurch die Klappe als solche eindeutig für die Abstandsmesseinrichtung erkennbar ist. Die Markierungen sorgen folglich dafür, dass die Position des Gegenkontaktabschnitts sicher bestimmt werden kann.

Eine Ausgestaltung der Erfindung betrifft ein Fahrzeug mit einem Unterboden, wobei am Unterboden eine Fahrzeugeinheit einer Ladevorrichtung nach einem der zuvor erörterten Ausbildungen befestigt ist. Wie erwähnt, hat die Anordnung der Fahrzeugeinheit am Unterboden den Vorteil, dass der Speicher für elektrische Energie von Fahrzeugen auch dann aufgeladen werden kann, wenn der Zwischenraum zwischen zwei benachbart geparkten Fahrzeugen sehr gering ist. Folglich bietet sich die Anordnung der Fahrzeugeinheit am Unterboden insbesondere für Parkhäuser oder öffentliche Parkplätze an, wo üblicherweise nur ein begrenzter Raum zur Verfügung steht, der möglichst optimal mit Fahrzeugen ausgefüllt werden muss, so dass der Zwischenraum zwischen zwei benachbart geparkten Fahrzeugen sehr gering ist. Beispielhafte Ausführungsformen der Erfindung werden im Folgenden unter Bezugnahme auf die beigefügten Zeichnungen näher erläutert. Es zeigen
- Figur 1A: eine Draufsicht auf ein Ausführungsbeispiel eines vorschlagsgemäßen Laderoboters,
- Figur 1B: eine Draufsicht auf das in Figur 1A dargestellte Ausführungsbeispiel des vorschlagsgemäßen Laderoboters ohne Abdeckungen,
- Figur 1C: eine Seitenansicht des in Figur 1A dargestellten Ausführungsbeispiels des Laderoboters,
- Figur 2A: eine perspektivische Darstellung einer Fahrzeugeinheit in einer ersten Stellung,
- Figur 2B: die in Figur 2A dargestellte Fahrzeugeinheit in einer zweiten Stellung,
- Figur 3A: den in Figur 1A gezeigten Laderoboter mit einer geöffneten Öffnungsklappe, der unterhalb der Fahrzeugeinheit angeordnet ist, in einer perspektivischen Darstellung,
- Figur 3B: den in Figur 1A gezeigten Laderoboter ohne Abdeckungen der unterhalb der Fahrzeugeinheit angeordnet ist, mit ausgefahrener Hubeinrichtung, in einer perspektivischen Darstellung,
- Figur 3C: eine Seitenansicht des in Figur 1A dargestellten Laderoboters mit ausgefahrener Hubeinrichtung,
- Figur 4A: eine isolierte perspektivische Darstellung eines Ausführungsbeispiels eines zweiten Aufnahmeraums des Laderoboters,
- Figur 4B: der in Figur 4A dargestellte zweite Aufnahmeraum in verschiedenen Betriebszuständen,
- Figur 5A: eine Schnittdarstellung eines als Flachbandkabel ausgeführten Ladekabels,
- Figur 5B: einen Draufsicht auf das in Figur 5A dargestellte Flachbandkabel, welches teilweise zusammengelegt ist, und
- Figur 6: eine prinzipielle Seitenansicht eines Fahrzeugs, dessen Speicher mit einer vorschlagsgemäßen Ladevorrichtung aufgeladen wird.

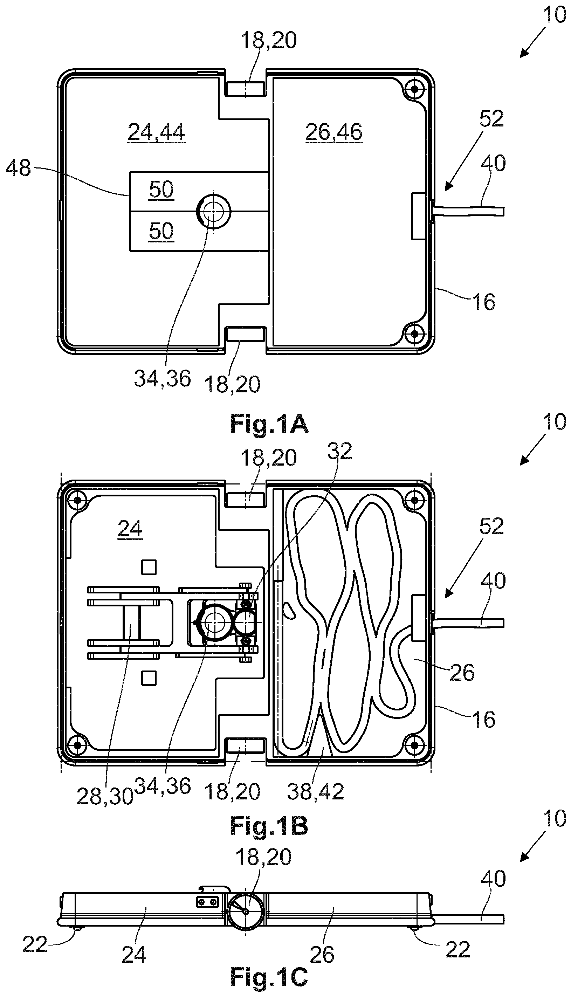

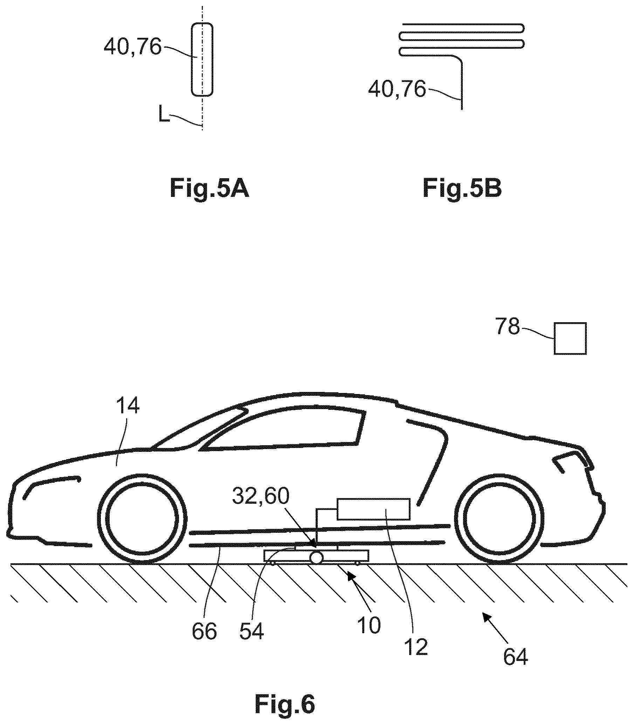

In den Figuren 1A bis 1C sind verschiedene Ansichten eines Ausführungsbeispiels eines erfindungsgemäßen Laderoboters 10 gezeigt, so dass sich die folgenden Ausführungen auf diese drei Figuren beziehen. Der Laderoboter 10 dient zum Aufladen eines Speichers 12 für elektrische Energie eines Fahrzeugs 14 (siehe Figur 6), worauf später noch genauer eingegangen wird. Der Laderoboter 10 weist eine Tragstruktur 16 auf, an welcher zwei Räder 18 um eine gemeinsame Drehachse drehbar befestigt sind, welche mit einer ebenfalls an der Tragstruktur 16 befestigten Antriebseinheit 20 antreibbar sind. Die Antriebseinheit 20 kann zwei Radnabenmotoren umfassen, mit denen die Räder 18 unabhängig voneinander antreibbar sind. Neben diesen beiden Rädern sind vier Hilfsräder 22 (Figur 1C) an der Tragstruktur 16 befestigt, welche um eine im bestimmungsgemäßen Gebrauch im Wesentlichen senkrecht verlaufende Drehachse (nicht dargestellt) drehbar sind. Die Hilfsräder 22 selbst sind aber nicht angetrieben und sorgen dafür, dass der Laderoboter 10 nicht auf dem Boden schleift. Aufgrund der Tatsache, dass der Laderoboter 10 nur zwei angetriebene Räder 18 aufweist, kann er auf der Stelle drehen und ist daher sehr wendig.

Die Tragstruktur 16 bildet im dargestellten Ausführungsbeispiel einen ersten Aufnahmeraum 24 und einen zweiten Aufnahmeraum 26, welche nebeneinander angeordnet sind. In etwa sind der erste Aufnahmeraum 24 auf einer Seite und der zweite Aufnahmeraum 26 auf der anderen Seite der gemeinsamen Drehachse der beiden Räder 18 angeordnet. Hierdurch kann der Laderoboter 10 sehr flach gebaut werden. Seine Höhe kann auf weniger als 10 cm reduziert werden.

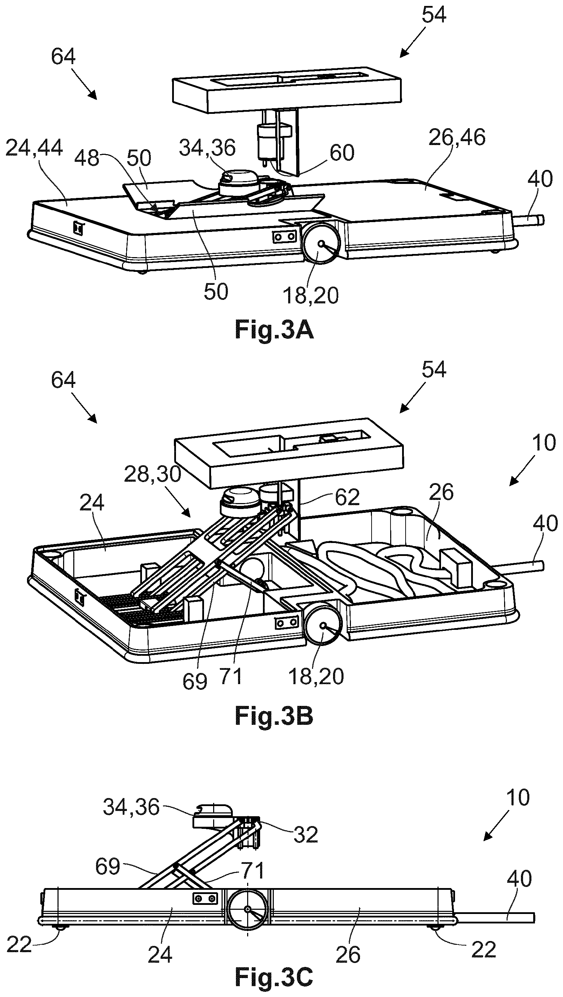

Im ersten Aufnahmeraum 24 ist eine Hubeinrichtung 28 angeordnet, die, wie insbesondere aus der Figur 3B hervorgeht, als eine Scherenhubeinrichtung 30 ausgeführt ist. An der Hubeinrichtung 28 sind ein Kontaktabschnitt 32 und eine Abstandsmesseinrichtung 34 angeordnet. Wie später noch genauer erläutert werden wird, sind der Kontaktabschnitt 32 und die Abstandsmesseinrichtung 34 so an der Hubeinrichtung 28 angeordnet, dass sie mit der Hubeinrichtung 28 angehoben und abgesenkt werden. Die Abstandsmesseinrichtung 34 umfasst eine Lidar-Einrichtung 36, mit welcher das Umfeld des Laderoboters 10 erfasst werden kann.

Im zweiten Aufnahmeraum 26 ist eine Führungseinrichtung 38 angeordnet, mit welcher ein Ladekabel 40, das den zweiten Aufnahmeraum 26 durchläuft und zum Kontaktabschnitt 32 führt, im zweiten Aufnahmeraum 26 geführt werden kann. Wie insbesondere aus der Figur 1B hervorgeht, umfasst die Führungseinrichtung 38 einen Vorsprung 42, der zum Führen des Ladekabels 40 innerhalb des zweiten Aufnahmeraums 26 dient.

Der erste Aufnahmeraum 24 ist mit einer ersten Abdeckung 44 verschlossen, während der zweite Aufnahmeraum 26 mit einer zweiten Abdeckung 46 verschlossen ist. Die erste Abdeckung 44 und die zweite Abdeckung 46 sind in Figur 1B aus Darstellungsgründen weggelassen. Aus Figur 1A geht hervor, dass die erste Abdeckung 44 eine Öffnung 48 hat, welche mit zwei Öffnungsklappen 50 verschließbar ist. In Figur 1A ist die Öffnung 48 mit den Öffnungsklappen 50 verschlossen, wobei ersichtlich ist, dass im geschlossenen Zustand der Öffnungsklappen 50 die Lidar-Einrichtung 36 außerhalb des ersten Aufnahmeraums 24 angeordnet ist. Hierdurch wird sichergestellt, dass die Lidar-Einrichtung 36 das Umfeld des Laderoboters 10 weitgehend hindernisfrei erfassen kann.

Das Ladekabel 40 tritt über eine Ausgangsöffnung 52 aus dem zweiten Aufnahmeraum 26 aus und kann mit einem nicht dargestellten Stecker an ein örtliches Stromnetz angeschlossen werden.

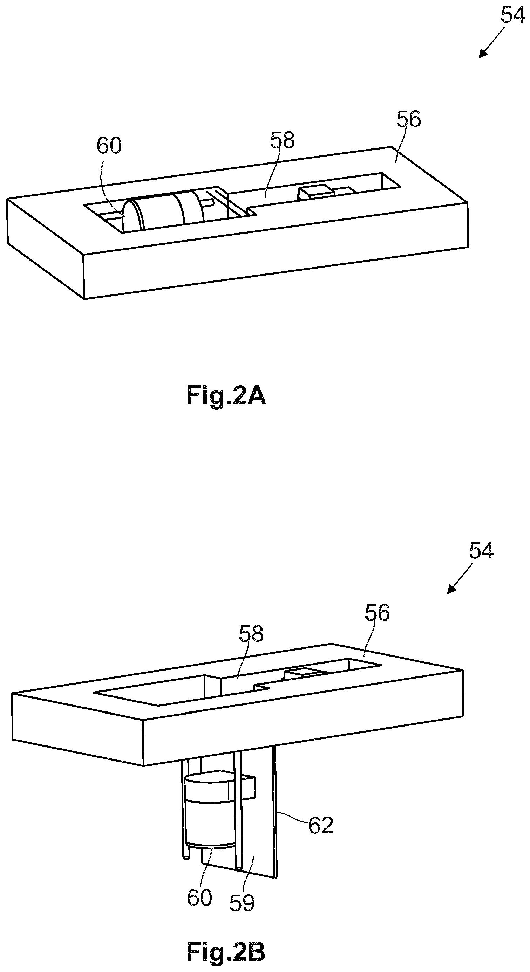

In den Figuren 2A und 2B ist ein Ausführungsbeispiel einer Fahrzeugeinheit 54 in einer ersten Stellung bzw. einer zweiten Stellung dargestellt. Die Fahrzeugeinheit 54 umfasst im Wesentlichen ein Gehäuse 56, welches einen Hohlraum 58 umschließt. Dieser Hohlraum 58 kann auf einer Seite mit einer Klappe 59 geöffnet und verschlossen werden. In der ersten Stellung wird der Hohlraum 58 von der Klappe 59 verschlossen, während in der zweiten Stellung die Klappe 59 den Hohlraum 58 freigibt. An der Klappe 59 ist ein Gegenkontaktabschnitt 60 angeordnet, der sich mit der Klappe 59 ebenfalls zwischen der ersten Stellung und der zweiten Stellung bewegen lässt. An der Klappe 59 sind Markierungen 62 angeordnet, auf deren Funktion später noch genauer eingegangen wird.

Anhand der Figuren 3A bis 3C soll nun die Wirkungsweise einer vorschlagsgemäßen Ladevorrichtung 64 erläutert werden, welche den Laderoboter 10 und die Fahrzeugeinheit 54 umfasst. Die Fahrzeugeinheit 54 ist an einem Unterboden 66 eines Fahrzeugs 14 montiert, was aus Figur 6 ersichtlich ist. Um den Speicher 12 für elektrische Energie des Fahrzeugs 14 aufzuladen, wird der Laderoboter 10 unter das Fahrzeug 14 gefahren, bis dass er die in Figur 3A dargestellte Position relativ zur Fahrzeugeinheit 54 erreicht hat. Die Klappe 59 der Fahrzeugeinheit 54 ist dabei bereits in die zweite Stellung bewegt worden, so dass die Abstandsmesseinrichtung 34 die Klappe 59 und insbesondere die auf der Klappe 59 angeordneten Markierungen 62 als Orientierung verwenden kann, um die Position des auf der Klappe 59 angeordneten Gegenkontaktabschnitts zu ermitteln. Insofern ist der Laderoboter 10 in der Lage, sich selbst in die in Figur 3A dargestellte Position zu fahren. Anschließend werden die beiden Öffnungsklappen 50 geöffnet, so dass die Öffnung 48 der ersten Abdeckung 44 freigegeben wird. Danach wird die Hubeinrichtung 28 ausgefahren, bis dass der Kontaktabschnitt 32 und der Gegenkontaktabschnitt 60 elektrisch übertragend verbunden sind. Die Scherenhubeinrichtung 30 weist dabei einen ersten Hebel 69 und einen zweiten Hebel 71 auf, wobei die Abstandsmesseinrichtung 34 und der Gegenkontaktabschnitt 60 an einem ersten Ende des ersten Hebels 69 angeordnet sind. Der erste Hebel 69 kann beispielsweise mittels einer nicht dargestellten Spindel, die an einem zweiten Ende angreift, zum zweiten Hebel 71 hin und von diesem weg bewegt werden. Der erste Hebel 69 und der zweite Hebel 71 sind drehbar miteinander verbunden.

Im dargestellten Ausführungsbeispiel sind der Kontaktabschnitt 32 und der Gegenkontaktabschnitt 60 nach Art eines Steckers bzw. einer Steckdose ausgeführt, so dass diese mechanisch verbunden werden müssen, um elektrische Energie übertragen zu können. In diesem Fall wird der Ladevorgang konduktiv durchgeführt. Nicht dargestellt ist eine Ausführungsform, in welcher der Kontaktabschnitt 32 und der Gegenkontaktabschnitt 60 im Wesentlichen als Platten ausgeführt sind, in denen Induktionsspulen angeordnet sind, so dass die elektrische Energie induktiv übertragen werden kann. In diesem Fall berühren sich der Kontaktabschnitt 32 und der Gegenkontaktabschnitt 60 nicht, allerdings verbleibt nur ein sehr schmaler Luftspalt zwischen dem Kontaktabschnitt 32 und dem Gegenkontaktabschnitt 60. An der Art und Weise des Betriebs des Laderoboters 10 und der Fahrzeugeinheit 54 ändert sich jedoch nichts Wesentliches.

Wie unter Berücksichtigung der Figur 6 erkennbar, ist der Gegenkontaktabschnitt 60 über eine entsprechende Leitung mit einem Speicher 12 für elektrische Energie des betreffenden Fahrzeugs 14 verbunden. Sobald der Kontaktabschnitt 32 und der Gegenkontaktabschnitt 60 elektrisch übertragend miteinander verbunden sind, kann elektrische Energie aus dem örtlichen Stromnetz in den Speicher 12 für elektrische Energie übertragen werden. Der Ladevorgang wird solange fortgesetzt, bis der Speicher 12 für elektrische Energie vollständig aufgeladen ist. Anschließend wird die Hubeinrichtung 28 wieder eingefahren, die Öffnungsklappen 50 geschlossen und die Klappe 59 der Fahrzeugeinheit 54 in die erste Stellung zurückgefahren. Der Laderoboter 10 kann nun zu einem weiteren Fahrzeug 14 fahren, dessen Speicher 12 für elektrische Energie aufgeladen werden soll.

Bezugnehmend auf die Figur 1B soll nun näher auf die Führungseinrichtung 38 des zweiten Aufnahmeraums 26 eingegangen werden, mit welchen das Ladekabel 40 im zweiten Aufnahmeraum 26 geführt werden kann. Aus Figur 1B geht hervor, dass ein Teil des Ladekabels 40 schleifenförmig im zweiten Aufnahmeraum 26 angeordnet ist. Um den Speicher 12 für elektrische Energie innerhalb einer akzeptablen Zeit aufladen zu können, muss ein möglichst großer Strom das Ladekabel 40 durchfließen können. Das Ladekabel 40 hat folglich einen vergleichsweise großen Querschnitt. Hieraus folgt, dass das Ladekabel 40 auch eine gewisse Steifigkeit aufweist. Fährt der Laderoboter 10 bezogen auf die in Figur 1B gezeigte Darstellung nach rechts, so wird das Ladekabel 40 aufgrund der erwähnten Steifigkeit in den zweiten Aufnahmeraum 26 eingeschoben. Die Führungseinrichtung 38 sorgt dafür, dass das Ladekabel 40 schleifenförmig im zweiten Aufnahmeraum 26 abgelegt wird. Infolgedessen kann der zweite Aufnahmeraum 26 sehr effektiv zur Ablage des Ladekabels 40 genutzt werden, so dass auch ein längeres Ladekabel 40 nahezu vollständig im zweiten Aufnahmeraum 26 abgelegt werden kann. Die Länge des Ladekabels 40 kann bis zu 7 m betragen. Es wird verhindert, dass das Ladekabel 40 Schlaufen bildet, welche ein Hindernis für den Laderoboter 10 oder für Personen darstellt, die sich in der unmittelbaren Umgebung des Ladekabels 40 aufhalten.

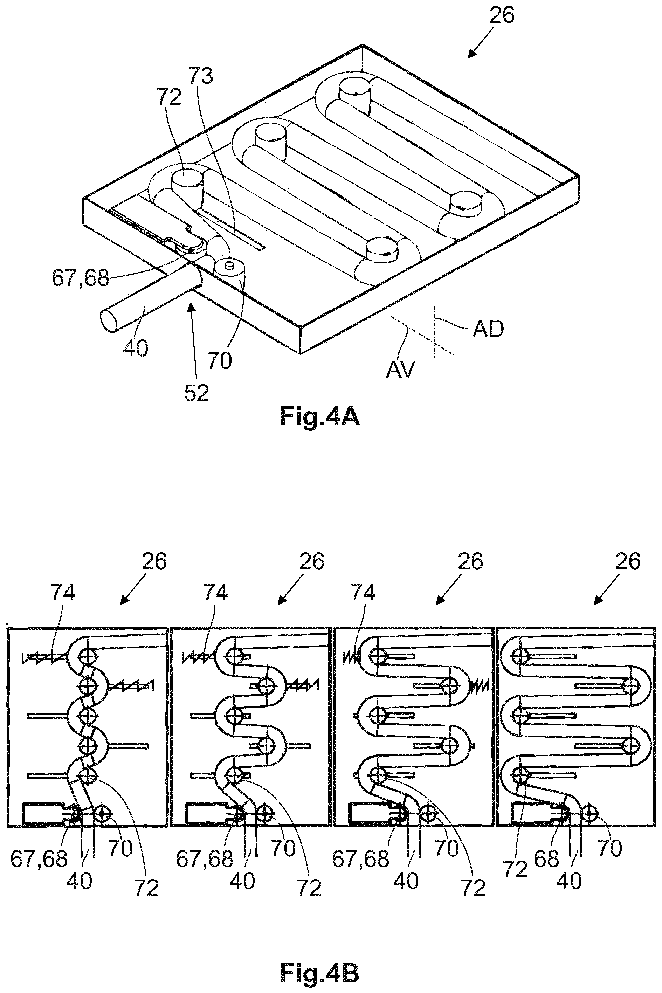

In den Figuren 4A und 4B ist ein weiteres Ausführungsbeispiel des zweiten Aufnahmeraums 26 gezeigt, welche eine Einzugseinrichtung 67 zum Einziehen des Ladekabels 40 in den zweiten Aufnahmeraum 26 aufweist. In Figur 4B sind verschiedene Betriebszustände des zweiten Aufnahmeraums 26 dargestellt.

Die Einzugseinrichtung 67 umfasst eine antreibbare Umlenkrolle 68, welche mit einer ortsfesten Umlenkrolle 70 zusammenwirkt.

Die ortsfeste Umlenkrolle und die antreibbare Umlenkrolle 68 sind benachbart zu der Ausgangsöffnung 52 angeordnet, durch welche das Ladekabel 40 in den zweiten Aufnahmeraum 26 eintritt. Das Ladekabel 40 verläuft zwischen der antreibbaren Umlenkrolle 68 und der ortsfesten Umlenkrolle 70. Aufgrund dieser Anordnung kann ein Drehmoment von der angetriebenen Umlenkrolle 68 auf das Ladekabel 40 übertragen werden, so dass dieses je nach Drehrichtung der angetriebenen Umlenkrolle 68 in den zweiten Aufnahmeraum 26 eingezogen oder aus diesem ausgezogen werden kann. Darüber hinaus sind im dargestellten Ausführungsbeispiel insgesamt fünf Umlenkstäbe 72 angeordnet, welche zwischen einer ersten Endstellung und einer zweiten Endstellung entlang einer Verschiebeachse AV axial verschiebbar sind. Die Verschiebeachse AV kann beispielsweise von einem Durchbruch 73 durch die Tragstruktur 16 vorgegeben werden. Die Umlenkstäbe 72 können um ihre eigene Drehachse AD drehbar sein. Wie insbesondere aus der Figur 4B hervorgeht, sind die Umlenkstäbe 72 mit jeweils einem Vorspannelement 74 in die erste Endstellung vorgespannt, welche in Figur 4B ganz rechts dargestellt ist. Aus Darstellungsgründen sind nur zwei Vorspannelemente 74 dargestellt, wobei jeder der Umlenkstäbe 72 mit jeweils einem Vorspannelement 74 zusammenwirken kann. Das Ladekabel 40 ist S-förmig oder meanderförmig um die Umlenkstäbe 72 herum geführt.

Wie bereits erwähnt, ist das Ladekabel 40 an seinem vom Laderoboter 10 abgewandten Ende mit einem Stecker an eine entsprechend ausgestaltete Steckdose anschließbar. Bewegt sich der Laderoboter 10 von der Steckdose weg hin zu einem Fahrzeug 14, zieht der Laderoboter 10 das Ladekabel 40 zumindest teilweise aus dem zweiten Aufnahmeraum 26 heraus. In Figur 4B ganz links ist ein Betriebszustand dargestellt, bei dem das Ladekabel 40 maximal weit aus dem zweiten Aufnahmeraum 26 herausgezogen ist. Die Umlenkstäbe 72 befinden sich in der zweiten Endstellung. Die Vorspannelemente 74 sind so angeordnet, dass in diesem Betriebszustand diese maximal vorgespannt sind. Bewegt sich nun der Laderoboter 10 wieder hin zur Steckdose, wird das Ladekabel 40 entspannt, so dass die Vorspannelemente 74 die Umlenkstäbe 72 zu der ersten Endstellung hin ziehen. In Figur 4B ganz rechts ist der Betriebszustand gezeigt, in welchen das Ladekabel 40 maximal weit in den zweiten Aufnahmeraum 26 eingezogen wird. In diesem Betriebszustand haben die Umlenkstäbe 72 ihre zweite Endstellung erreicht. Die übrigen Darstellungen in Figur 4B zeigen Zwischenstellungen.

Die antreibbare Umlenkrolle 68 kann dabei steuernd eingreifen. Sie wird erfindungsgemäß von der Antriebseinheit 20 angetrieben werden, mit welcher die beiden Räder 18 angetrieben werden. Somit kann eine Synchronisierung der Bewegung des Laderoboters 10 und der Spannung des Ladekabels 40 realisiert werden. Hierdurch kann sichergestellt werden, dass das Ladekabel 40 während des gesamten Betriebs weitgehend straff ist, so dass es keine Schlaufen bilden kann. Allerdings kann auch vermieden werden, dass zu viel Zug auf das Ladekabel 40 aufgebracht wird, um eine übermäßige mechanische Beanspruchung des Ladekabels 40 zu vermeiden.

Nicht dargestellt ist eine Ausführungsform, bei welcher die Umlenkstäbe 72 eine eigene Antriebseinrichtung aufweisen, die zielgerichtet angesteuert werden kann.

Ebenfalls nicht dargestellt ist eine Ausführungsform, bei welcher die Umlenkrolle und die antreibbare Umlenkrolle 68 entlang ihrer Drehachse höhenverstellbar sind. In diesem Ausführungsbeispiel kann das Ladekabel 40 in mehreren Etagen innerhalb des zweiten Aufnahmeraums 26 abgelegt werden. Hierzu kann der zweite Aufnahmeraum 26 mehrere Zwischenböden aufweisen, die einerseits ein Aufbäumen des Ladekabels 40 verhindern und andererseits einen ebenen Boden zur Verfügung stellen, um zu vermeiden, dass beispielsweise sich der Teil des Ladekabels 40, der in der zweiten Etage angeordnet ist, mit dem Teil des Ladekabels 40 verhakt, wodurch es zu einer unkontrollierten Anordnung des Ladekabels 40 kommen könnte. Die Höhenverstellung der ortsfesten Umlenkrolle 70 und der antreibbaren Umlenkrolle 68 kann beispielsweise mittels eines Druckschalters ausgelöst werden, der vom Ladekabel 40 selbst aktiviert wird. Wenn beispielsweise die erste Etage des zweiten Aufnahmeraums 26 weitgehend vom Ladekabel 40 eingenommen ist, versucht das Ladekabel 40, auszuweichen, wenn es weiter in den zweiten Aufnahmeraum hineingeschoben wird, wobei sich ein auf eine sich entgegenstellende Fläche wirkender Druck aufbaut. Dieser Druck dann zum Aktivieren des Druckschalters verwendet werden, um die Höhenverstellung der ortsfesten Umlenkrolle 70 und der antreibbaren Umlenkrolle 68 anzustoßen.

Folglich ist es möglich, auch besonders lange Ladekabel 40 nahezu vollständig im zweiten Aufnahmeraum 26 abzulegen.

In den Figuren 5A und 5B ist ein Ausführungsbeispiel des Ladekabels 40 dargestellt, bei welchen das Ladekabel 40 als ein Flachbandkabel 76 ausgeführt ist. Figur 5A zeigt dabei einen Schnitt durch das Flachbandkabel 76, aus dem ersichtlich ist, dass das Flachbandkabel 76 einen im Wesentlichen rechteckigen Querschnitt aufweist. Aufgrund dieses Querschnitts lässt sich das Flachbandkabel 76 besonders gut um die in Figur 5A eingezeichnete Längsachse L biegen. In Figur 5B ist ein Flachbandkabel 76 in der Draufsicht dargestellt, welches zumindest teilweise schlaufenförmig oder meanderförmig zusammengelegt worden ist. Aufgrund der Tatsache, dass einerseits das Flachbandkabel 76 in engen Radien biegbar ist und andererseits sehr flach baut, lässt sich auch ein besonders langes Ladekabel 40 im zweiten Aufnahmeraum 26 ablegen. Das schlaufenförmige oder meanderförmige Ausrichten des Ladekabels 40 wird in der Ausgestaltung als Flachbandkabel 76 im Vergleich zu einem kreisförmigen Querschnitt begünstigt. Zudem wird ein Verdrehen des Ladekabels 40 in der Ausgestaltung als Flachbandkabel 76 vermieden, so dass die Ausrichtung im zweiten Aufnahmeraum 26 gut definierbar ist. Hierzu kann die Raumhöhe des zweiten Aufnahmeraums 26 so gewählt werden, dass das Flachbandkabel 76 nur einen geringen Abstand zur Decke und zum Boden des zweiten Aufnahmeraums 26 aufweist. Der Boden und die Decke wirken als Führungsmittel 38, gleichzeitig wird die Raumhöhe des zwieten Aufnahmeraums 26 optimal ausgenutzt.

Wie bereits erwähnt, zeigt Figur 6 ein Fahrzeug 14, dessen Speicher 12 für elektrische Energie mit einer vorschlagsgemäßen Ladevorrichtung 64 aufgeladen wird. Bei dem dargestellten Fahrzeug 14 soll es sich um einen Sportwagen handeln, welcher eine geringe Bodenfreiheit aufweist. Annäherungsweise lässt sich die Bodenfreiheit als Abstand zwischen dem Boden, auf dem das Fahrzeug 14 abrollt, und dem Unterboden 66 des Fahrzeugs 14 definieren. Wie ebenfalls erwähnt, ist es mit dem erfindungsgemäßen Laderoboter 10 möglich, auch Fahrzeuge mit einer geringen Bodenfreiheit aufzuladen, bei welcher die Fahrzeugeinheit 54 am Unterboden 66 befestigt ist. Aufgrund der Tatsache, dass die Hubeinrichtung 28 als eine Scherenhubeinrichtung 30 ausgeführt ist, lassen sich auch Fahrzeuge 14 mit dem erfindungsgemäßen Laderoboter 10 aufladen, die eine überdurchschnittlich hohe Bodenfreiheit aufweisen, beispielsweise SUVs.

Die Ladevorrichtung 64 umfasst eine Steuereinheit 78, mit welcher der Laderoboter 10 gesteuert wird. Die Steuereinheit 78 kommuniziert beispielsweise über WLAN oder andere Kommunikationsstandards mit dem Laderoboter 10 zweckmäßigerweise drahtlos. Die Steuereinheit 78 kann auch mit dem betreffenden Fahrzeug 14 kommunizieren, um fahrzeugspezifische Daten auszutauschen, die beim Ladevorgang berücksichtigt werden können.

### Bezugszeichenliste

- 10: Laderoboter
- 12: Speicher
- 14: Fahrzeug
- 16: Tragstruktur
- 18: Rad

- 20: Antriebseinheit
- 22: Hilfsrad
- 24: erster Aufnahmeraum
- 26: zweiter Aufnahmeraum
- 28: Hubeinrichtung

- 30: Scherenhubeinrichtung
- 32: Kontaktabschnitt
- 34: Abstandsmesseinrichtung
- 36: Lidar-Einrichtung
- 38: Führungseinrichtung

- 40: Ladekabel
- 42: Vorsprung
- 44: erste Abdeckung
- 46: zweite Abdeckung
- 48: Öffnung

- 50: Öffnungsklappe
- 52: Ausgangsöffnung
- 54: Fahrzeugeinheit
- 56: Gehäuse
- 58: Hohlraum
- 59: Klappe
- 60: Gegenkontaktabschnitt
- 62: Markierung
- 64: Ladevorrichtung
- 66: Unterboden
- 67: Einzugseinrichtung
- 68: antreibbare Umlenkrolle
- 69: erster Hebel

- 70: ortsfeste Umlenkrolle
- 71: zweiter Hebel
- 72: Umlenkstab
- 73: Durchbruch
- 74: Vorspannelement
- 76: Flachbandkabel
- 78: Steuereinheit

- AD: Drehachse
- AV: Verschiebeachse
- L: Längsachse

## Patentansprüche

1. Laderoboter (10) zum Aufladen eines Speichers (12) für elektrische Energie eines Fahrzeugs (14), umfassend
- eine Tragstruktur (16),
- zumindest ein an der Tragstruktur (16) drehbar befestigtes Rad (18),
- eine an der Tragstruktur (16) befestigte Antriebseinheit (20), die dazu eingerichtet ist, das Rad (18) anzutreiben ,
- einen an der Tragstruktur (16) befestigten oder von der Tragstruktur (16) gebildeten ersten Aufnahmeraum (24) und
- einen an der Tragstruktur (16) befestigten oder von der Tragstruktur (16) gebildeten zweiten Aufnahmeraum (26), wobei
o der erste Aufnahmeraum (24) und der zweite Aufnahmeraum (26) nebeneinander angeordnet sind,
- eine im ersten Aufnahmeraum (24) angeordnete Hubeinrichtung (28), an welcher ein Kontaktabschnitt (32) befestigt ist, der mit einem Gegenkontaktabschnitt (60) des Fahrzeugs (14) elektrisch übertragend verbindbar ist, und
- ein mit dem Kontaktabschnitt (32) leitend verbundenes Ladekabel (40), über welches elektrische Energie zum Kontaktabschnitt (32) leitbar ist, wobei das Ladekabel (40) den zweiten Aufnahmeraum (26) durchläuft, und
- eine Führungseinrichtung (38), mit welcher das Ladekabel (40) im zweiten Aufnahmeraum (26) geführt wird, **dadurch gekennzeichnet, dass** der Laderoboter (10) eine im zweiten Aufnahmeraum (26) angeordnete Einzugseinrichtung (67) zum Einziehen des Ladekabels in den zweiten Aufnahmeraum (26) aufweist,
- wobei die Einzugseinrichtung (67) zumindest eine antreibbare Umlenkrolle (68) aufweist, und
- wobei die Antriebseinheit (20) weiter dazu eingerichtet ist, die Umlenkrolle (68) anzutreiben

2. Laderoboter (10) nach Anspruch 1,
**dadurch gekennzeichnet, dass** die Führungseinrichtung (38) im zweiten Aufnahmeraum (26) angeordnete Vorsprünge (42) und/oder Ausnehmungen aufweist, welche mit dem Ladekabel (40) führend zusammenwirken.

3. Laderoboter (10) nach einem der Ansprüche 1 oder 2,
**dadurch gekennzeichnet, dass** die Führungseinrichtung (38) zumindest eine ortsfeste Umlenkrolle (70) aufweist.

4. Laderoboter (10) nach einem der vorgenannten Ansprüche, **dadurch gekennzeichnet, dass** die Einzugseinrichtung (67) zumindest einen entlang einer Verschiebeachse (AV) zwischen einer ersten Endstellung und einer zweiten Endstellung axial verschiebbaren Umlenkstab (72) aufweist.

5. Laderoboter (10) nach Anspruch 4,
**dadurch gekennzeichnet, dass** der Umlenkstab (72) um eine senkrecht zur Verschiebeachse (AV) verlaufende Drehachse (AD) drehbar ist.

6. Laderoboter (10) nach einem der Ansprüche 4 oder 5,
**dadurch gekennzeichnet, dass** der Umlenkstab (72) mittels eines Vorspannelements (74) in die erste oder die zweite Endstellung vorgespannt ist.

7. Laderoboter (10) nach einem der vorherigen Ansprüche,
**dadurch gekennzeichnet, dass** das Ladekabel (40) als ein Flachbandkabel (76) ausgeführt ist.

8. Laderoboter (10) nach einem der vorherigen Ansprüche,
**dadurch gekennzeichnet, dass** der Laderoboter (10) eine Abstandsmesseinrichtung (34) aufweist, mit welcher der Abstand des Laderoboters (10) zu benachbart angeordneten Gegenständen, insbesondere zum Gegenkontaktabschnitt (60), bestimmbar ist.

9. Laderoboter (10) nach Anspruch 8,
**dadurch gekennzeichnet, dass** die Abstandsmesseinrichtung (34) eine Lidar-Einrichtung (36) umfasst.

10. Laderoboter (10) nach Anspruch 9,
**dadurch gekennzeichnet, dass** die Lidar-Einrichtung (36) zumindest teilweise an der Hubeinrichtung (28) angeordnet ist.

11. Laderoboter (10) nach einem der Ansprüche 9 oder 10,
**dadurch gekennzeichnet, dass** der erste Aufnahmeraum (24) mit einer ersten Abdeckung (44) verschlossen ist, in welcher zumindest eine Öffnung (48) angeordnet ist, die mit zumindest einer Öffnungsklappe (50) verschließbar ist.

12. Laderoboter (10) nach einem der vorherigen Ansprüche,
**dadurch gekennzeichnet, dass** die Hubeinrichtung (28) als eine Scherenhubeinrichtung (30) ausgeführt ist.

13. Ladevorrichtung (64) zum Aufladen eines Speichers (12) für elektrische Energie eines Fahrzeugs (14), umfassend
- einen Laderoboter (10) nach einem der vorherigen Ansprüche, und
- eine an einem Unterboden (66) des Fahrzeugs (14) befestigbare und mit dem Speicher (12) verbindbare Fahrzeugeinheit (54), in welcher der Gegenkontaktabschnitt (60) angeordnet ist.

14. Ladevorrichtung (64) nach Anspruch 13,
**dadurch gekennzeichnet, dass** die Fahrzeugeinheit (54) zumindest eine Klappe (59) aufweist, welche zwischen einer ersten Stellung und einer zweiten Stellung bewegbar ist, wobei der Gegenkontaktabschnitt (60) an der Klappe (59) befestigt ist.

15. Ladevorrichtung (64) nach einem der Ansprüche 13 oder 14, **dadurch gekennzeichnet, dass** die Fahrzeugeinheit (54) und/oder die Klappe (59) Markierungen (62) aufweist, welche von der Abstandsmesseinrichtung (34) erfassbar sind.

16. Fahrzeug (14) mit einem Unterboden (66), wobei am Unterboden (66) eine Fahrzeugeinheit (54) einer Ladevorrichtung (64) nach einem der Ansprüche 13 bis 15 befestigt ist.

## Claims

1. Charging robot (10) for charging a storage device (12) for electrical energy of a vehicle (14), comprising
- a support structure (16),
- at least one wheel (18) rotatably attached to the support structure (16),
- a drive unit (20) attached to the support structure (16), which is configured to drive the wheel (18),
- a first receiving space (24) attached to the support structure (16) or formed by the support structure (16), and
- a second receiving space (26) attached to the support structure (16) or formed by the support structure (16), wherein
o the first receiving space (24) and the second receiving space (26) are arranged next to one another,
- a lifting device (28) arranged in the first receiving space (24), to which a contact section (32) is attached, which is connectable in an electrically transmitting manner to a mating contact section (60) of the vehicle (14), and
- a charging cable (40) conductively connected to the contact section (32), via which electrical energy can be conducted to the contact section (32), wherein the charging cable (40) passes through the second receiving space (26), and
- a guide device (38), with which the charging cable (40) is guided in the second receiving space (26),
**characterized in that** the charging robot (10) comprises a retraction device (67) arranged in the second receiving space (26) for retracting the charging cable into the second receiving space (26),
- wherein the retraction device (67) has at least one drivable deflection roller (68), and
- wherein the drive unit (20) is further configured to drive the deflection roller (68).

2. Charging robot (10) according to claim 1, **characterized in that** the guide device (38) comprises projections (42) and/or recesses arranged in the second receiving space (26), which cooperate with the charging cable (40) in a guiding manner.

3. Charging robot (10) according to one of claims 1 or 2, **characterized in that** the guide device (38) has at least one stationary deflection roller (70).

4. Charging robot (10) according to one of the preceding claims, **characterized in that** the retraction device (67) has at least one deflection rod (72) axially displaceable along a displacement axis (AV) between a first end position and a second end position.

5. Charging robot (10) according to claim 4, **characterized in that** the deflection rod (72) is rotatable about a rotation axis (AD) extending perpendicular to the displacement axis (AV).

6. Charging robot (10) according to one of claims 4 or 5, **characterized in that** the deflection rod (72) is biased into the first or the second end position by means of a biasing element (74).

7. Charging robot (10) according to one of the preceding claims, **characterized in that** the charging cable (40) is embodied as a flat ribbon cable (76).

8. Charging robot (10) according to one of the preceding claims, **characterized in that** the charging robot (10) has a distance measuring device (34), with which the distance of the charging robot (10) from adjacently arranged objects, in particular from the mating contact section (60), can be determined.

9. Charging robot (10) according to claim 8, **characterized in that** the distance measuring device (34) comprises a LiDAR device (36).

10. Charging robot (10) according to claim 9, **characterized in that** the LiDAR device (36) is arranged at least partially on the lifting device (28).

11. Charging robot (10) according to one of claims 9 or 10, **characterized in that** the first receiving space (24) is closed with a first cover (44), in which at least one opening (48) is arranged, which can be closed with at least one opening flap (50).

12. Charging robot (10) according to one of the preceding claims, **characterized in that** the lifting device (28) is embodied as a scissor lifting device (30).

13. Charging device (64) for charging a storage device (12) for electrical energy of a vehicle (14), comprising
- a charging robot (10) according to one of the preceding claims, and
- a vehicle unit (54) attachable to an underbody (66) of the vehicle (14) and connectable to the storage device (12), in which vehicle unit the mating contact section (60) is arranged.

14. Charging device (64) according to claim 13, **characterized in that** the vehicle unit (54) comprises at least one flap (59), which is movable between a first position and a second position, wherein the mating contact section (60) is attached to the flap (59).

15. Charging device (64) according to one of claims 13 or 14, **characterized in that** the vehicle unit (54) and/or the flap (59) has markings (62), which are detectable by the distance measuring device (34).

16. Vehicle (14), comprising an underbody (66), wherein a vehicle unit (54) of a charging device (64) according to one of claims 13 to 15 is attached to the underbody (66).

## Revendications

1. Robot (10) de chargement pour le chargement d'un accumulateur (12) d'énergie électrique d'un véhicule (14) comprenant
- une structure (16) de support,
- au moins une roue (18) fixée de manière à tourner autour de la structure (16) de support,
- une unité (20) d'entraînement fixée à la structure (16) de support et agencée pour entraîner la roue (18),
- un premier espace (24) de réception fixé à la structure (16) de support ou formé par la structure (16) de support et
- un deuxième espace (26) de réception fixé à la structure (16) de support ou formé par la structure (16) de support, dans lequel
o le premier espace (24) de réception et le deuxième espace (26) de réception sont disposés l'un à côté de l'autre,
- un dispositif (28) de levage disposé dans le premier espace (24) de réception et sur lequel est fixé un segment (32) de contact, qui peut être connecté avec transmission de l'électricité à un segment (60) de contact antagoniste du véhicule (14), et
- un câble (40) de charge relié de manière conductrice au segment (32) de contact et par lequel de l'énergie électrique peut être envoyée au segment (32) de contact, dans lequel le câble (40) de charge passe dans le deuxième espace (26) de réception, et
- un dispositif (38) de guidage, par lequel le câble (40) de charge est guidé dans le deuxième espace (26) de réception,
**caractérisé en ce que** le robot (10) de chargement a un dispositif (67) de rentrée disposé dans le deuxième espace (26) de réception pour rentrer le câble de charge dans le deuxième espace (26) de réception,
- dans lequel le dispositif (67) de rentrée a au moins un rouleau (68) de renvoi pouvant être entraîné et dans lequel l'unité (20) d'entraînement est agencé en outre pour entraîner le rouleau (68) de renvoi.

2. Robot (10) de chargement suivant la revendication 1,
**caractérisé en ce que** le dispositif (38) de guidage a des saillies (42) et/ou des évidements disposés dans le deuxième espace (26) de réception, qui coopèrent en guidant avec le câble (40) de charge.

3. Robot (10) de chargement suivant l'une des revendications 1 ou 2,
**caractérisé en ce que** le dispositif (38) de guidage a au moins un rouleau (70) de renvoi fixe en emplacement.

4. Robot (10) de chargement suivant l'une des revendications précédentes,
**caractérisé en ce que** le dispositif (67) de renvoi a au moins un barreau (72) de renvoi pouvant coulisser axialement le long d'un axe (AV) de déplacement entre une première position d'extrémité et une deuxième position d'extrémité.

5. Robot (10) de chargement suivant la revendication 4,
**caractérisé en ce que** le barreau (72) de renvoi peut tourner autour d'un axe (AD) de rotation s'étendant perpendiculairement à l'axe (AV) de déplacement.

6. Robot (10) de chargement suivant l'une des revendications 4 ou 5,
**caractérisé en ce que** le barreau (72) de renvoi est précontraint dans la première ou la deuxième position d'extrémité au moyen d'un élément (74) de précontrainte.

7. Robot (10) de chargement suivant l'une des revendications précédentes,
**caractérisé en ce que** le câble (40) de charge est réalisé sous la forme d'un câble (76) à bande plate.

8. Robot (10) de chargement suivant l'une des revendications précédentes,
**caractérisé en ce que** le robot (10) de chargement a un dispositif (34) de mesure de distance, par lequel la distance du robot (10) de chargement à des objets disposés à son voisinage, en particulier au segment (60) de contact antagoniste, peut être déterminée.

9. Robot (10) de chargement suivant la revendication 8,
**caractérisé en ce que** le dispositif (34) de mesure de distance comprend un dispositif (36) lidar.

10. Robot (10) de chargement suivant la revendication 9,
**caractérisé en ce que** le dispositif (36) lidar est disposé au moins en partie sur le dispositif (28) de levage.

11. Robot (10) de chargement suivant l'une des revendications 9 ou 10,
**caractérisé en ce que** le premier espace (24) de réception est fermé par un premier recouvrement (44), dans lequel est disposé au moins une ouverture (48), qui peut être fermée par au moins un volet (50) d'ouverture.

12. Robot (10) de chargement suivant l'une des revendications précédentes,
**caractérisé en ce que** le dispositif (28) de levage est réalisé sous la forme d'un dispositif (30) de levage à ciseaux.

13. Dispositif (64) de chargement pour le chargement d'un accumulateur (12) d'énergie électrique d'un véhicule (14) comprenant
- un robot (10) de chargement suivant l'une des revendications précédentes, et
- une unité (54) de véhicule, qui peut être fixée au dessous (66) de caisse du véhicule (14) pouvant être connecté à l'accumulateur (12) et dans laquelle est disposé le segment (60) de contact antagoniste.

14. Dispositif (64) de chargement suivant la revendication 13, **caractérisé en ce que** l'unité (54) de véhicule a au moins un volet (59), qui peut se déplacer entre une première position et une deuxième position, dans lequel le segment (60) de contact antagoniste est fixé au volet (59).

15. Dispositif (64) de chargement suivant l'une des revendications 13 ou 14,
**caractérisé en ce que** l'unité (54) de véhicule et/ou le volet (59) a des repères (62), qui peuvent être détectés par le dispositif (34) de mesure de distance.

16. Véhicule (14) ayant un dessous (66) de caisse, dans lequel au dessous (66) de caisse est fixée une unité (54) de véhicule d'un dispositif (64) de chargement suivant l'une des revendications 13 à 15.
